# EUROPEAN PATENT APPLICATION

(11) **EP 2 958 068 A1**
(43) Date of publication of application: **23.12.2015**
(21) Application number: 14305908.7
(22) Date of filing: 16.06.2014
(51) Int. Cl.: G06Q 30/02, G06Q 10/10

(54) **Method and device for rewarding collaborative creation**

(71) Applicant: Thomson Licensing, 92130 Issy-les-Moulineaux (FR)
(72) Inventor: MAETZ, Yves, 35576 Cesson-Sévigné (FR); ELUARD, Marc, 35576 Cesson-Sévigné (FR)
(74) Representative: Huchet, Anne

(57) **Abstract**

A method and apparatus for rewarding collaborative creation are described including hierarchically defining tasks of a collaborative project (805), defining a type of weight for each of the defined tasks (815), assigning weights to each of the defined tasks according to the type of weight defined for each task (820), measuring and recording contributions by collaborators as each task is performed (825) and determining rewards for the collaborators (835).

## Description

### FIELD OF THE INVENTION

The proposed process and system relates to processes and systems allowing collective creation by individual contributors.

### BACKGROUND OF THE INVENTION

Collaborative creation frameworks have been proposed in the domain of movie creation: 5^{th} kind, Scenios, AFrame, etc. Collaborative creation frameworks allow multiple participants of a common project to share data together through a web-based platform. Some project participants upload data (e.g., ingesting rushes recorded from the camera, 3D model creation), others project participants modify some data (e.g., color correction) or combine different data to build new data (e.g., edition, visual effects (VFX)) and other project participants review the data available on the platform. Rushes are video sequences recorded by a camera. The best rushes are selected and assembled together during the editing phase to form the resulting movie.

Sub-version control: Versioning and revision control systems like Subversion (SVN), GIT, Clearcase are used in the domain of software development to handle multiple versions of files created or modified by possibly multiple participants. SVN is a free/open-source version control system. In software development, GIT is a distributed revision control and source code management (SCM) system with an emphasis on speed.

These version control systems allow multiple services including maintaining the history of the files, merging contributions from multiple sources, comparing different versions, labeling a precise version, etc.

Workflow management systems have been proposed in different areas: business process management, enterprise content management and more generally project management. Such systems focus mainly on the organizational aspects of a project. Workflow management systems allow splitting subsequent work into a set of tasks and defining the constraints between tasks and sometimes assigning tasks to people.

Neither workflow management systems nor version control systems track the individual contributions of the participants. At most these systems are able to list the files that have been modified by a given user but these systems do not measure or evaluate each individual contribution.

US2012/0323625 tracks the contribution of participants into an IP system by flagging the people that contribute to one "project". However, the contribution per project is only measured as a binary value: contribution or not. It is impossible to compare two contributions with this system since there is no associated value or measure of the contribution. For example, writing a complete book chapter or correcting a typo error will be measured at the same level.

In US 20130254298 A1, the tasks are taken independently of each other. It is not possible in US 20130254298 A1 to express the fact that the valuation of the task must respect the hierarchical organization of the task decomposition.

### SUMMARY OF THE INVENTION

A problem addressed by the proposed process and system is to track the individual contributions of the participants to a collective creation project. A goal is to determine the overall contribution of each participant as well as to measure or assess the impact of these contributions in the final result.

All projects are different. Projects are composed of different stages of different importance, depending on the project. Moreover, the types of contributions are also different and, therefore, contribution measurement may require different techniques. Finally, a same contribution will have a different impact, depending on the stage of the creation to which it is related. For example, it may be interesting to emphasize importance of editing the dialog of the hero in the script at the writing stage (very early in the creation process), compared to translating the same dialog into a foreign language, much later in the process. Those two tasks are very similar: edition of a number of words in a text. However, the first one is about artistic creation and impacts the complete movies, whereas the second one is a more simple task with only a limited impact. Therefore, the proposed process should allow weightings of the individual contributions. Weightings could help to assign a different value for the creative tasks than for the more basic tasks.

Measuring the individual contributions can be used to rank the different contributors, from the most prolific contributor top down. This list can, for example, be used as credits list to be inserted at the end of the movie. Contribution valuation may also allow a completely new business for filmmaking where the contributors could be rewarded through receiving a fraction of the earnings in the case of commercial success. In such a case, it could be an option to negotiate some agreements lowering or reducing the fixed wages and compensating contributors through compensation based on the movie results (incentive compensation). The proposed process and system solves an issue critical to the growth of collective online creation projects and could lead to new businesses and even new business models for online content creation. Such business models could leverage gaming or contest mechanisms to involve contributors, avoiding the use of traditional monetization systems.

The proposed process and system applies to any creative project where users (participants) bring some contribution. Creative type projects include filmmaking, web documentaries, music creation, software programming, architectural design, web site design, etc. The proposed process and system can be "added on" to state of art business process management systems, task management systems and workflow management systems. The proposed process and system is particularly adapted to crowdsourcing activities.

A method for rewarding collaborative creation is described including hierarchically defining tasks of a collaborative project, defining a type of weight for each of the defined tasks, assigning weights to each of the defined tasks according to the type of weight defined for each task, measuring and recording contributions by collaborators as each task is performed and determining rewards for the collaborators. An apparatus for rewarding collaborative creation is also described including a task manager including a dispatcher for accepting hierarchical task definitions, a tasks data base for storing the hierarchically defined tasks, the dispatcher in communication with the tasks data base, a weighting measurer module for accepting weight types of the hierarchically defined tasks, the weighting measurer module in communication with the dispatcher, the dispatcher for dispatching the hierarchically defined tasks to collaborators, a production data base for storing results of the collaborators efforts to perform the hierarchically defined tasks, the dispatcher in communication with the production data base, the weighting measurer module for accepting assignments of weights for each of the hierarchically defined tasks according to the type of weight for each task, the weighting measurer module coordinating with the dispatcher to measure and record credits to be awarded to collaborators as each hierarchically defined task is completed, the credits awarded to each collaborator are stored in a credits data base and a generator module generates a personal rewards weighted list scoreboard for the collaborators to receive their rewards.

### BRIEF DESCRIPTION OF THE DRAWINGS

The present system is best understood from the following detailed description when read in conjunction with the accompanying drawings. The drawings include the following figures briefly described below:
Fig. 1 is an exemplary tag cloud.
Fig. 2 shows the steps of the task managemen process.
Fig. 3 is an exemplary screen shot of step 1 (defining tasks and groups).
Fig. 4 is an exemplary screen shot of step 2 (select weight type).
Fig. 5 is an exemplary screen shot of step 2 (assign weights).
Fig. 6 is an exemplary screen shot of hierarchical task decomposition.
Fig. 7 is an exemplary screen shot of the completed steps 1 and 2.
Fig. 8 is a flowchart of an exemplary implementation of the present invention.
Fig. 9 is a block diagram of an exemplary implementation of the presentsystem.

### DETAILED DESCRIPTION OF THE PREFERRED EMBODIMENTS

The proposed process and system allows tracking the amount of contribution of each participant (hereafter denoted credits) to a collective creation project. At the end of the project, this tracking will allow (1) an automatic listing of the names of all participants (optionally ordered by the type of contribution) and (2) establishing the credits of each participants with some rating. Moreover, the proposed process allows a new business model for collaborative creation projects where the participants would be paid after completion of the project, when the project is monetized. Each participant would receive a reward proportional to the importance of his/her contribution.

A contribution rating mechanism based on weighted measurement system to be added to any task management platforms is proposed where:
- the project owner first hierarchically defines the set of tasks needed to complete the project.
- for each task, a weight parameter is provided, either by the project owner or using default values based on past projects.
- tasks are assigned to participants. Tasks can be assigned either by having the project owner assign tasks to a given participants or by having the participants spontaneously "taking" tasks. In the second case, it may be ensured that the requirements to fulfill a given task are fulfilled by the participants (e.g., skills) to avoid some useless works. There are many ways in which tasks can be parsed out to participants. For example, tasks or subtasks may be assigned by the project manager. In the case of assignment by the project manager the tasks or subtasks may be assigned using participant rankings from previous projects. Tasks or subtasks may be performed by self-assignment. That is, a participant may chose (select) a task or subtask that has not yet been assigned and deliver the result. The participant, in the case of self-assignment, should probably claim the task or subtask by inserting his/her name beside the task in order to avoid duplicate effort by another participant also choosing the task or subtask by self-assignment. The tasks or subtasks may be assigned to multiple participants with a winning task or subtask submission chosen by the project manager. The participants in a "contest" assignment may always participate and never win so there is an element of the possibility of never receiving any incentive reward.

- when one participant completes one task, the system credits him according the weight of the task done.
- at the end of the project, all credits are gathered and may be inserted into the project result. If tasks have types, the system is able to produce the list of credits ordered by work types (task types such as sound, visual effects, etc.).

Later, when rewards have to be distributed, contributors may receive financial rewards according to the credits measure accumulated (recorded) by the platform.

At any time in the project lifetime, the project owner is able to get a status of all participant's contributions with their weighting.

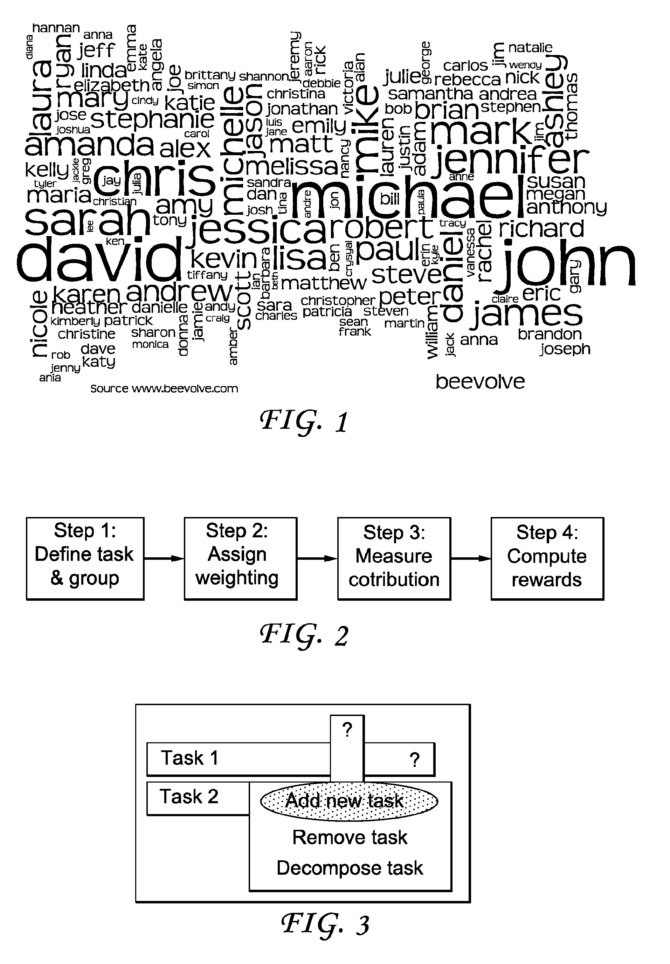

When inserting the credits automatically, a tag cloud may give hints about the measure of the contributions of each participant. Fig. 1 is an exemplary tag cloud. The tag cloud of Fig. 1 shows that the major contributors to this project were John, David, Michael, Chris and Sarah. When mapping the credits to a tag cloud as described above, it may prove useful to keep the same color for similar types of tasks.

As described above, depending on the type of project, the different stages needed to complete the project may be varied. For example, a common decomposition for a film- making project includes four stages: writing, pre-production, production, post-production. Each of these stages may again be decomposed into sub-stages. For example, production can include lighting, shooting, dressing, make-up, acting, ingesting, etc. The movie itself is split in scenes and the sub-stages apply to each of these scenes. In other domains (music, architecture, software programming, etc.) the stages are different but the principle is still the same. The process is independent of the task management chosen by the owner. As a result, the decomposition into tasks is preferably done as a hierarchy of tasks and not a simple list. Different weighting can be applied to different levels of the hierarchy.

The whole process is split in four phases shown in Fig. 2:
- Step 1: the tasks are hierarchically defined, some tasks are grouped together. Generally the tasks are organized hierarchically
- Step 2: weights are being assigned to the tasks and groups of tasks, for each group deciding what type of weighting is to be used and the corresponding value for each task of the group
- Step 3: the system then measures the contribution of each users. This part is very dependent on the framework used (e.g. PF120176 for video production), but any generic tasks and process management system may be used if it is able to measure the individual contributions of users on the tasks
- Step 4: the credits are computed (recorded, accumulated, calculated, determined) according to the weighting rules defined in step 2 and the real user contributions measured in step 3.

The process proposed includes the following non-exhaustive list of weighting systems:
- percentages: each task is evaluated according a percentage of the overall project. This is particularly useful when the project deals with many different stages. The use of percentages allows introducing some balance between the different stages, for example, giving more importance to early creative stages that influence directly all the further (future) tasks, related to the production.
- points: each task is given a number of points. In a broader vision of multi-project platforms, the use of points allows defining a "fixed" rate, independently of the project and allows building a marketplace for collaborative workers. For example, in film making, a sound effect can be awarded 100 points while providing a complete music song could be valued 5000 points.
- quantity: each task is measured by the quantity of data generated. With digital systems, the number of bits generated could be a good measure of quantity. In analog domains, the quantity could be measured by the duration of the produced data, for example, 3:30 for a song.
- time: each task can be measured by the time needed to complete it, either reflecting the actual time spent to perform the task or using fixed rates.

Collective creation very often involves many different skills that have different impacts. Some tasks are highly creative and have huge impact on the result, typically the tasks at the beginning of the project where most creative decisions are made. Other tasks are secondary and less creative, their impact is lower and consequently the weighting of the less creative tasks can also be lower. The present system allows such a differentiation. The project owner can emphasize each contribution differently.

The proposed system could lead to an innovative business model for many projects but more particularly for any project dealing with the creation of a digital content and using online workers. As introduced above, a typical application would be the realization of movies, from shorts to full-feature films including animated movies, television and internet content such as series, news, documentaries, coverage of sport events, etc.

For the ease of understanding, the present process will be illustrated with an example: collective collaborative book writing. However, the same principles would apply to more complex creation environments.

In this example, multiple participants are collaborating to create a book on a technical subject. The project owner comes with the initial idea and proposes a table of content. The overall project is hierarchically decomposed into the following tasks: initial idea, chapters writing, proof-reading and typographical corrections, translation into a second language, proof-reading and typographical correction for the second language, design of the cover and back page, file preparation and conformance for publication. The project creator decided of the following weighting:
- Initial idea: 40%
- Chapters writing 50%, evenly split among the 10 chapters
- Proof-reading/typo 1%
- Translation 2%
- Proof-reading translated 1%
- Design 5%
- File prep 1%

Each participant will be rewarded proportionally to his/her contribution. So for example, if the book makes $100k in profits, the participant that made the design will receive $5k. The creator of the initial idea gets $40k.

In an alternative implementation of the previous example, the task related to the definition of the initial idea is done through a contest. In such case, multiple participants are competing on a given task, the contest participants propose their contributions and only one of them will be selected for the final release. Some specific policy may be defined to reward some of the best contributions and to encourage the "losing" participants to participate again.

In the contest scenario, the "initial idea" phase is open to a contest. It is decided to give 80% of the contest pool to the TOP three winners and 20% shared with the other participants. Within the TOP three winners, the first place contestant will receive 70%, the second place contestant will receive 20% and the third place contestant will receive 10%. Within the other contributors, each one gets one point. In this example, the contest had 53 participants. The top winners are Alice, Bob and Charlie, in this order. Dave participated also but is not one of the winners. The project made $100k so $40k are valuated to the initial idea phase. Alice gets $22.4k (70% of 80% of $40k), Bob gets $6.4k, Charlie $3.2k. Dave and the other contributors get $160 (1/50^{th} of 20% of $40k).

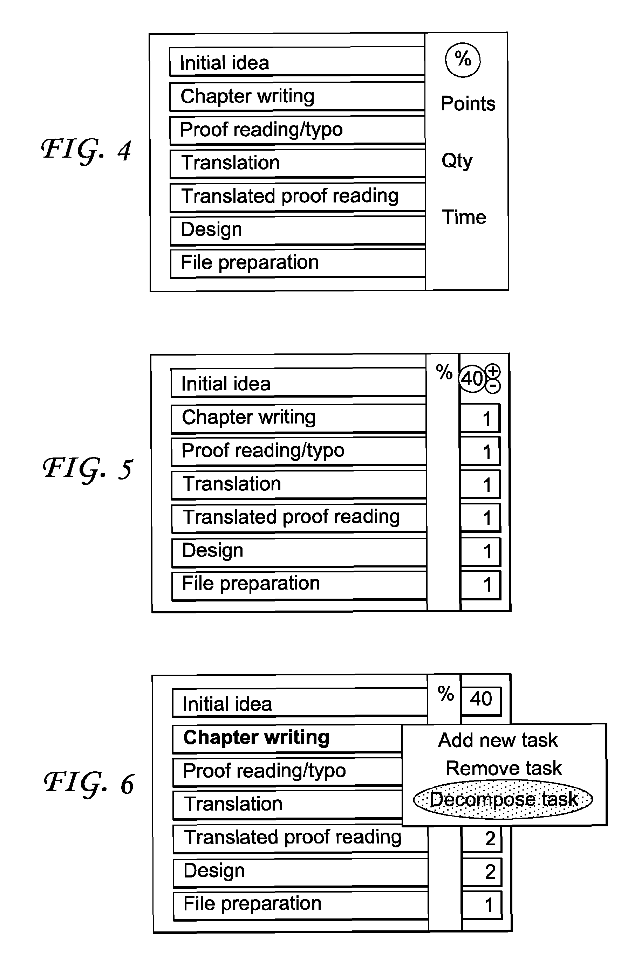

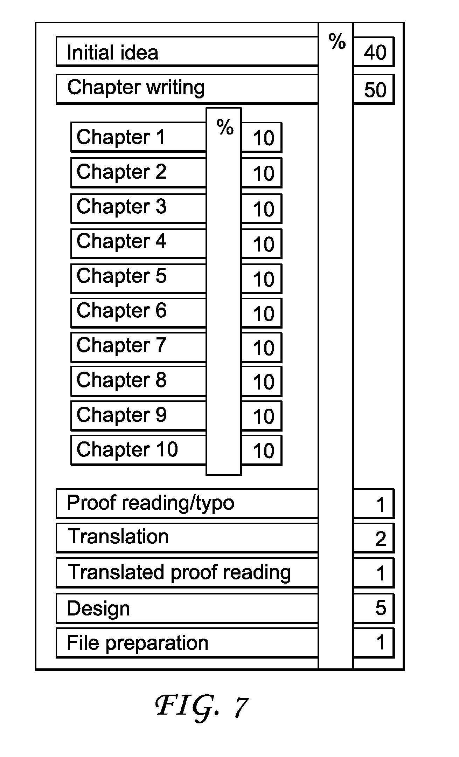

Using the above book writing example and applying the present process to this project, Fig. 3 is an exemplary screen shot of step 1 (defining tasks and groups). As can be seen, the process guides the user (project owner, project manager) through the steps. The first step being to define the tasks necessary to complete the project. Fig. 4 is an exemplary screen shot of step 2 (select weight type). As described above once the tasks are hierarchically defined the process guides the user (project owner, project manager) in deciding the type of weighting to be used - percentages, quantity, time or points. Fig. 5 is an exemplary screen shot of step 2 (assign weights). Once the user (project owner, project manager) has decided on the type of weighting to be used then the user (project owner, project manager) needs to assign weights to the tasks and subtasks. Fig. 6 is an exemplary screen shot of hierarchical task decomposition. Under the task chapter writing, the user (project owner, project manager) has decided that there will be a plurality of chapters so the chapter writing task will be hierarchically decomposed into the number of chapters anticipated for the book. Fig. 7 is an exemplary screen shot of the completed steps 1 and 2. In the above example, it was decided that there would be 10 chapters and each chapter is asigned 10% of the 50% chapter writing percentage budget.

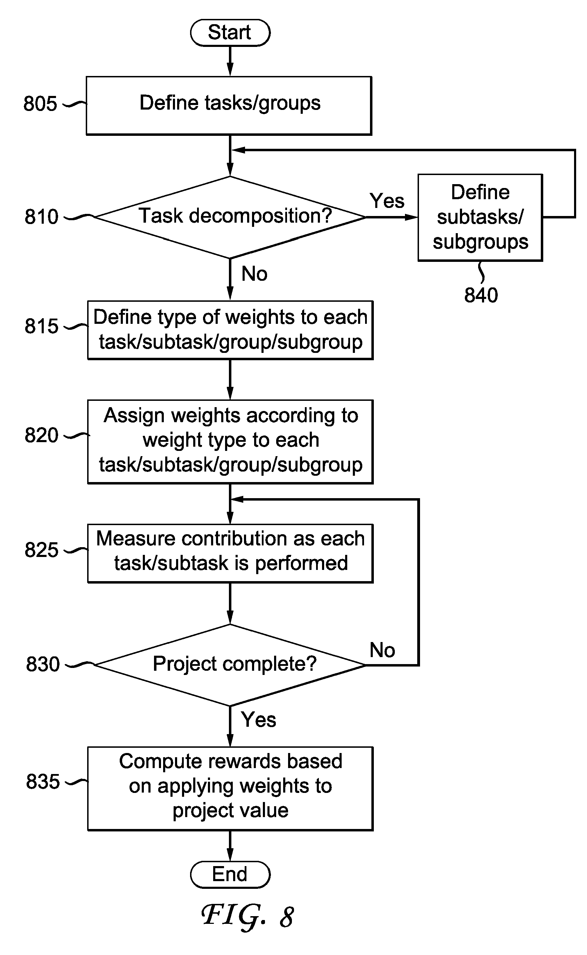

Fig. 8 is a flowchart of an exemplary implementation of the proposed process. At 805 the tasks and/or groups are hierarchically defined. This step would usually be accomplished by the project manager. At 810 a determination is made whether the tasks and/or groups are to be hierarchically decomposed into subtasks. This step could be accomplished either by the project manager or by a task manager for each task that requires hierarchical decomposition. If any of the tasks need hierarchical decomposition then at 840 subtasks and/or subgroups are defined for the task(s) that require hierarchical decomposition. Processing then proceeds to 810. If no tasks and/or groups need to be decomposed then at 815 the type of weight is defined for each task/subtask/group/subgroup. At 820 weights are assigned to each task/subtask/group/subgroup according to the weight type defined for each task/subtask/group/subgroup. At 825 as the tasks/subtasks are performed by the groups/subgroups, each team member's (user's, participant's, worker's, employee's) contribution is measured and recorded. At 830 a determination is made whether the project is complete. If the project is not complete then processing proceeds to 825. If the project is complete then at 835 rewards are computed (calculated, determined) based on applying the assigned weights to the project value. The project value may be entered at project inception or when the project is monetized or at any other time in the project life cycle. Please note that the decomposition can be applied recursively so that the subtasks may be decomposed into sub-subtasks, and so on. Rewards may also be computed after the end of a project phase.

In the case where different weighting systems are used simultaneously, it is necessary to define a technique to aggregate their results. The following cases are differentiated.
- Homogeneous at hierarchical level: as illustrated in the example above, it is possible to mix easily weighting systems as long as they are homogeneous at a given hierarchical level. In the example, the upper level is measured using percentages. The participants are measured with points. Indeed, at the beginning, the creator does not know how many people will participate.
- More complex usage requiring homogenization rules: For example, it is possible to map one technique to another technique, and having transformation rules to perform the conversions (e.g.: 1 second of music is valued 10 points, 50 words of script are valued 42 points, etc.). Imagine some other rules for the contest: the top 3 winners are awarded 80% that decomposes into 100 points per word for the winner, 30 points per word for the second place contestant and 10 points per word for the third place contestant. Alice, Bob and Charlie are still the top three winners. They have provided respectively 600 words, 700 and 400 words and therefore are awarded 60000, 21000 and 4000. The total is 85000 that have to be mapped to the 80%. Alice will get $28235 ($40k * 60000 / 85000), Bob $9882 and Charlie $1882.
- Meta-weighting system: When no transformation rules make sense, a meta-weighting system could also be defined and an arbitrary conversion could be defined. For example, it could be decided to use percentages for the whole system and attributing a part of the overall percentage to each type of weighting (25% for percentages, 25% for points, 25% for quantity and 25% for time) and then to decide which type of weighting is used for all the phases. This allows the computation of a final measure for each of the contribution.
- The screenshot examples illustrate how to specify the weighting used for each of the creation phases. This choice is generally performed by a project manager or project owner.

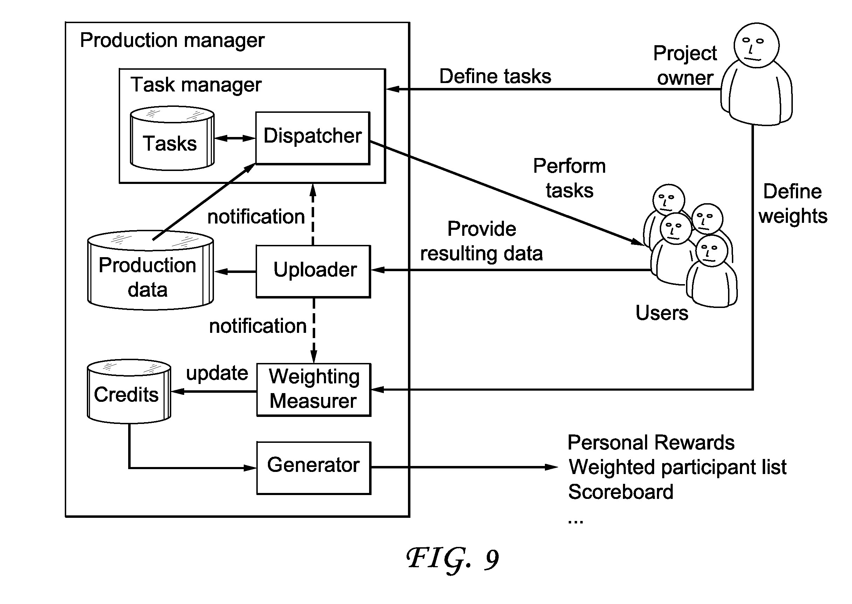

Fig. 9 is a block diagram of an exemplary implementation of the present system . The project owner accesses the task manager portion of the production management system (production manager) to define the project tasks. The task definition process is hierarchical and iterative and may include decomposition into subtasks or even sub-subtasks depending upon the detail required by the project. The hierarchically defined tasks and/or subtasks are stored in a tasks database in the task manager portion of the production management system. The project owner also assigns the type of weights and weights assigned to the tasks or subtasks via the weighting measurer module of the production management system. The users (participants, team members) perform the tasks which are dispatched to them by accessing the dispatcher module of the task manager portion of the production management system and using the appropriate data from the production data storage area (database). The results of each performed task is uploaded by the user to the production manager through the uploader. The uploader stores the updated or new data provided by the user to the production data storage area (database), notifies the dispatcher that the task has been completed and notifies the weighting measurer module in order to determine the credits to be awarded to the user. The credits awarded to each user are stored in the credits storage area (database) of the production management system. The generator module generates the personal rewards weighted participant list scoreboard so that the participants may receive their rewards. Rewards may be credited to the participants at any time during the project or an the end of the project.

It is to be understood that the present invention may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for rewarding collaborative creation, said method **characterized by**:
hierarchically defining tasks of a collaborative project (805);
defining a type of weight for each of said defined tasks(815);
assigning weights to each of said defined tasks according to the type of weight defined for each task (820);
measuring and recording contributions by collaborators as each task is performed (825); and
determining rewards for said collaborators (835).

2. The method according to claim 1, further comprising:
iteratively decomposing said hierarchically defined tasks into hierarchically defined subtasks (840);
defining a type of weight for each of said hierarchically defined subtasks.

3. The method according to claim 1, **characterized in that** said measuring and recording of said contributions of said collaborators further comprises allocating a weighted value to each contribution of each collaborator.

4. The method according to claim 1, **characterized in that** said type of weight is one of points, a percentage, a quantity and a time, and said percentage weight is an evaluation of each of said tasks according to a percentage of the collaborative project, and said points weight is an evaluation of each of said tasks according a point system, wherein said quantity weight is an evaluation of each of said tasks according to a quantity of data generated, and said time weight is an evaluation of each of said tasks according to a time needed to complete each of said tasks.

5. The method according to claim 3, **characterized in that** said determination of said rewards is accomplished by applying said weighted value of each task to a project value and summing said rewards for each task for each contributor.

6. The method according to claim 4, **characterized in that** each hierarchically defined task may be assigned a different type of weight.

7. The method according to claim 1, **characterized in that** the determination of rewards can be done iteratively after each new contribution.

8. An apparatus for rewarding collaborative creation, comprising and **characterized by**:
a task manager including a dispatcher for accepting hierarchical task definitions;
a tasks database for storing said hierarchically defined tasks, said dispatcher in communication with said tasks data base;
a weighting measurer module for accepting weight types of said hierarchically defined tasks, said weighting measurer module in communication with said dispatcher;
said dispatcher for dispatching said hierarchically defined tasks to collaborators;
a production data base for storing results of said collaborators efforts to perform said hierarchically defined tasks, said dispatcher in communication with said production data base;
said weighting measurer module for accepting assignments of weights for each of said hierarchically defined tasks according to the type of weight for each task;
said weighting measurer module coordinating with said dispatcher to measure and record credits to be awarded to collaborators as each hierarchically defined task is completed, said credits awarded to each collaborator are stored in a credits data base; and
a generator module generates a personal rewards weighted list scoreboard for said collaborators to receive their rewards.

9. The apparatus according to claim 8, further comprising:
said dispatcher accepting iteratively defined hierarchically subtasks, said iteratively defined hierarchically subtasks being decomposed from said hierarchically defined tasks; and
said weighting measurer module for accepting weight types of said hierarchically defined subtasks.

10. The apparatus according to claim 8, **characterized in that** said weighting measurer module further allocates a weighted value to each contribution of each collaborator.

11. The apparatus according to claim 8, **characterized in that** said type of weight is one of points, a percentage, a quantity and a time, and said percentage weight is an evaluation of each of said tasks according to a percentage of the collaborative project, and said points weight is an evaluation of each of said tasks according a point system, and said quantity weight is an evaluation of each of said tasks according to a quantity of data generated, and said time weight is an evaluation of each of said tasks according to a time needed to complete each of said tasks.

12. The apparatus according to claim 8, and said generator module generates said rewards by applying said weighted value of each task to a project value and summing said rewards for each task for each contributor.

13. The apparatus according to claim 9, and each hierarchically defined task may be assigned a different type of weight.

14. The apparatus according to claim 8, and the determination of rewards can be done iteratively after each new contribution.
